# DEMANDE DE BREVET EUROPEEN

(11) **EP 4 804 123 A1**
(43) Date de publication de la demande: **09.09.2026**
(21) Numéro de dépôt: 26150309.8
(22) Date de dépôt: 06.01.2026
(51) Int. Cl.: G06T 7/246

(54) **PROCEDE ET DISPOSITIF DE PRISE DE VUE D'UN SUJET EN MOUVEMENT**

(30) Priorité: 05.03.2025 FR 2502205
(71) Demandeur: Idemia Public Security France, 92400 Courbevoie (FR)
(72) Inventeur: NGUYEN, Ngoc-Son-Dorian, 92400 Courbevoie (FR); LOITIERE, Yannick, 92400 Courbevoie (FR)
(74) Mandataire: IPS

(57) **Abrégé**

La présente invention concerne un procédé de capture d'images d'une zone d'intérêt d'un sujet (103) en mouvement comprenant :
- calcul répété à une fréquence de calcul de la position en trois dimensions, de la zone d'intérêt dans le volume de capture ;
- estimation d'une trajectoire en trois dimensions de la zone d'intérêt à partir des positions calculées; la trajectoire étant définie par un modèle paramétrique de trajectoire combinant une composante temporelle périodique et linéaire ;
- détermination d'une position de la zone d'intérêt à au moins un instant futur *t_{capture}* à partir de la trajectoire estimée;
- capture d'une image de la zone d'intérêt avec pointage de la caméra de capture en direction de la position déterminée de la zone d'intérêt à l' instant *t_{capture}.*

## Description

La présente invention concerne le domaine de la prise de vue d'une zone d'intérêt localisée sur un sujet en mouvement. Plus particulièrement, l'invention s'intéresse au suivi et à l'obtention d'une prise de vue nette de la zone d'intérêt localisée sur une personne en mouvement.

Il peut s'agir, dans un premier exemple, de reconnaître les iris d'une personne évoluant devant le système de capture, dans le cas de reconnaissance biométrique de personne en mouvement. Dans un second exemple, il peut également s'agir de lire une information, telle qu'un code bidimensionnel ou QR code, d'un badge porté par une personne en mouvement. D'autres exemples de contextes techniques peuvent bénéficier de l'invention.

Il existe des systèmes permettant la capture de la zone d'intérêt lorsque le sujet est fixe. Le volume de capture est la zone de l'espace considérée pour la capture de l'image de la zone d'intérêt. C'est la zone dans laquelle le sujet peut évoluer en permettant la capture de la zone. Si le sujet sort du volume de capture, il n'est pas considéré par le système de capture.

Lorsque le sujet est fixe, le système de capture peut fonctionner sur le principe suivant. Dans une première étape, le sujet est détecté et localisé au sein du volume de capture. Ensuite, le système de capture attend la stabilisation du sujet. Lorsque le sujet est stable, une étape précise de localisation de la zone d'intérêt permet d'en obtenir les coordonnées en trois dimensions. Ces coordonnées permettent alors de positionner la caméra de capture, équipée de moteurs permettant son orientation, dans la direction précise de la zone d'intérêt visée. Une succession d'images est alors capturée jusqu'à obtention de la qualité suffisante pour l'application, typiquement la reconnaissance de l'iris ou la lecture de l'information. Il est à noter que les applications envisagées nécessitent la capture d'une image de bonne résolution, que ce soit pour la reconnaissance des iris ou la lecture de l'information.

Lorsque le sujet est en mouvement, la capture d'images nettes de la zone d'intérêt se complique. En effet, le mouvement du sujet peut générer des images floues. De plus, du fait de la résolution et de la sensibilité nécessaire, les images capturées présentent une très faible profondeur de champ. Une imprécision sur la distance de la zone d'intérêt produit alors également la capture d'une image floue. En outre, il a également pu être constaté que pour de la capture d'iris à courte portée, notamment à moins d'un mètre, le pointage devenait délicat, le mouvement de la personne ne pouvant plus être compensé par le champ de la caméra, et la cible sortant du champ de la caméra de capture. De même, à courte portée, il a été observé que la latence temporelle entre la détection des yeux et la commande de mouvement de la caméra de capture par ses moteurs pouvait affecter sensiblement la précision de la position estimée. Ces inconvénients pouvant résulter en des échecs lors de suivis à courte portée ou à une vitesse de marche élevée.
L'invention vise à résoudre tout ou partie de ces problèmes en proposant un procédé de capture d'images d'une zone d'intérêt d'un sujet en mouvement qui permette l'acquisition, de manière fiable, d'une image nette de la zone d'intérêt visée du sujet en mouvement, notamment à courte portée (par exemple à moins d'un mètre, notamment jusqu'à 70 cm de la caméra de capture) y compris pour une vitesse de marche élevée du sujet en mouvement (par exemple à plus de 1m/s , notamment jusqu' à 1.5 m/s).

Selon un aspect de l'invention, il est proposé un procédé de capture d'images d'une zone d'intérêt d'un sujet en mouvement, au sein d'un volume de capture, le procédé comportant les étapes suivantes :
- calcul répété à une fréquence de calcul d'une position en trois dimensions de la zone d'intérêt, formant en sortie une séquence de positions en trois dimensions de la zone d'intérêt, dont est fonction un signal observable de position instantanée, à partir d'une série d'images acquises dans lesquelles la zone d'intérêt est détectée et localisée;
- extraction, à une fréquence d'application, d'un signal observable périodique à partir du signal observable de position instantanée ;
- estimation d'une trajectoire en trois dimensions de la zone d'intérêt dans le volume de capture à partir des positions calculées; la trajectoire étant, selon au moins une dimension, définie par un modèle paramétrique de trajectoire combinant une composante temporelle périodique et une composante temporelle linéaire ;
- détermination d'une position de la zone d'intérêt à au moins un instant futur *t_{capture}* à partir de la trajectoire estimée en trois dimensions de la zone d'intérêt ;
- capture à l'instant *t_{capture}* d'une image de la zone d'intérêt par une caméra de capture avec pointage de la caméra de capture en direction de la position déterminée de la zone d'intérêt à l'instant *t_{capture} .*

Ce procédé permet une capture d'une image nette de la zone d'intérêt d'un sujet en mouvement, y compris à courte portée, avec un temps de suivi court pendant lequel une séquence de positions en trois dimensions de la zone d'intérêt est obtenue à l'issue de la détection et de la localisation. En outre, ce procédé permet de compenser des latences. Ainsi, le nombre d'images capturées du sujet par la caméra de capture est réduite, la capture par la caméra de capture d'une seule image du sujet pouvant même suffire, de par la qualité d'image obtenue, à l'application, notamment biométrique, la capture d'une succession d'images du sujet par la caméra de capture n'étant plus nécessairement requise. En outre, ce procédé permet de suivre plusieurs sujets en parallèle.

En particulier, le mouvement du sujet est un mouvement de marche, notamment dont la vitesse est inférieure à 2m/s, en particulier entre 1 et 1.5 m/s, le procédé est donc adapté aux allures de marche moyenne mais également pressée.

Avantageusement les images acquises sont les images d'un volume de détection, acquises par un système de caméra de contexte, appelées aussi images contexte, ce qui permet un suivi par la caméra de contexte pendant lequel une séquence de positions en trois dimensions de la zone d'intérêt dans le volume de détection est obtenue à l'issue de la détection et de la localisation. De même, si plusieurs sujets sont présents dans le volume de détection et apparaissent dans les images contexte, une zone d'intérêt par sujet sera suivie.

De manière avantageuse, si les acquisitions sont réalisées à une fréquence d'acquisition donnée, la fréquence de calcul est notamment inférieure ou égale à ladite fréquence d'acquisition.

Avantageusement, l'estimation est réalisée à une fréquence d'estimation, préférentiellement égale à la fréquence de calcul.

Avantageusement, la capture est réalisée par une caméra de capture dans le volume de capture à une fréquence de capture.

Avantageusement, le volume de détection, qui correspond à la portion du champ du système de caméra de contexte dans lequel la qualité d'image acquise est suffisante pour réaliser de la détection d'objet (par exemple de profondeur supérieure à 2 mètres à partir du système caméra de contexte, préférentiellement 2.50 mètres), et le volume de capture, qui correspond à la portion du champ de la caméra de capture dans lequel la qualité d'image capturée est suffisante pour réaliser une reconnaissance de la zone d'intérêt, comportent une partie commune, ce qui permet de travailler avec un volume de détection ayant une profondeur supérieure à celle du volume de capture, qui est notamment contraint par la haute résolution requise pour de l'acquisition iris en vue de reconnaissance biométrique (par exemple de profondeur entre 1.50 mètre et 0.50 mètre à partir de la caméra de capture pour de la reconnaissance d'iris). La profondeur élevée du volume de détection permet un suivi ayant déjà permis la convergence du modèle avant même que le sujet ne pénètre dans le volume de capture, sachant que l'initialisation est par exemple effectuée sur un demi-mouvement de pas, soit environ 50 centimètres.

Préférentiellement, le signal observable de position instantanée est constitué par la séquence des positions calculées pour la zone d'intérêt.

Avantageusement, la composante temporelle périodique du modèle de trajectoire comporte un paramètre d'amplitude, un paramètre de phase et un paramètre de pulsation, ce qui permet de représenter une composante temporelle périodique sinusoïdale. De manière équivalente à cette décomposition spectrale en pulsation, une décomposition en fréquence est possible.

Avantageusement, la composante temporelle linéaire du modèle de trajectoire comporte un paramètre de taux de variation et un paramètre d'ordonnée à l'origine.

Avantageusement, une desdites au moins une dimension est la dimension (y) verticale, ce qui permet de modéliser la hauteur de la région d'intérêt d'un sujet en mouvement avec précision, notamment en prenant en considération son cadencement haut-bas, ce qui est particulièrement important pour pointer la caméra de capture en direction de la position déterminée de la zone d'intérêt la zone d'intérêt, particulièrement lorsque le sujet marche.

Avantageusement, une desdites au moins une dimension est la dimension (x) latérale, ce qui permet de modéliser le mouvement latéral horizontal (x) de balancier gauche-droite de la région d'intérêt d'un sujet en mouvement avec précision, particulièrement lorsque le sujet marche.

De même, ladite au moins une dimension peut désigner les deux dimensions précitées car le pas, la démarche d'un sujet inclut non seulement un mouvement vertical (y) haut-bas mais aussi un mouvement de balancier gauche-droite (x).

Avantageusement, une desdites au moins une dimension est la dimension (z) longitudinale, ce qui permet de modéliser le mouvement longitudinal horizontal (z) de profondeur de la région d'intérêt d'un sujet en mouvement avec précision, notamment quand il marche. En effet, dans une moindre mesure la trajectoire selon la dimension (z) de profondeur peut également être ainsi modélisée, ce qui apporte une meilleure estimation qu'une approximation linéaire seule car la démarche d'un sujet suit un rythme propre qui par exemple varie en fonction de la jambe d'appui et dont le mouvement résultant, notamment quand la personne boîte, n'est pas nécessairement symétrique, créant un effet de pompage avant-arrière à chaque pas.

Ainsi, ladite au moins une dimension peut avantageusement désigner les trois dimensions précitées de manière à estimer avec précision la localisation de la zone d'intérêt dans lesdites trois dimensions.

Avantageusement, le pointage de la caméra de capture est accompagné d'un réglage de la mise au point de la caméra de capture en fonction de la distance entre la caméra de capture et la position déterminée de la zone d'intérêt à l'instant *t_{capture}* , ce qui permet d'améliorer la netteté de l'image obtenue notamment si la profondeur de champ de l'objectif de la caméra de capture n'est pas suffisamment large. Avantageusement, le réglage et le pointage peuvent être réalisés simultanément.

Avantageusement, le réglage de la mise au point de la caméra de capture est réalisé sur la distance entre la caméra de capture et la position déterminée de la zone d'intérêt à l'instant *t_{capture}* additionnée d'un facteur de mise au point variant par pas, fixes ou variables, dans un intervalle, notamment centré sur zéro, ce qui permet de mettre en oeuvre une rampe de focus.

Avantageusement, le facteur de mise au point évolue linéairement entre les valeurs extrêmes de l'intervalle centré sur zéro.

Avantageusement, le facteur de mise au point évolue de manière sinusoïdale entre les valeurs extrêmes de l'intervalle centré sur zéro.

Avantageusement, le facteur de mise au point évolue avec un pas d'incrément correspondant à la profondeur de champ entre les valeurs extrêmes de l'intervalle centré sur zéro.

Dans un mode de réalisation, le sujet est une personne, la zone d'intérêt étant une partie d'un visage du sujet en mouvement, notamment un œil, préférentiellement un iris, ou étant une représentation visuelle (pictogramme) portée par le sujet, telle qu'un code à barres à deux dimensions.

Avantageusement, la fréquence de capture par la caméra de capture est supérieure à la fréquence d'acquisition par le système de caméra de contexte.

Dans un mode de réalisation, l'étape d'estimation de la trajectoire comporte une mise en œuvre, pour la zone d'intérêt détectée du sujet, d'un filtre de Kalman étendu du modèle paramétrique de trajectoire selon ladite au moins une dimension, comprenant une phase d'initialisation du filtre de Kalman étendu, une phase de prédiction du filtre de Kalman étendu et une phase de mise à jour du filtre de Kalman étendu selon une fréquence d'échantillonnage. Le filtre de Kalman étendu permet de linéariser localement la composante non linéaire du modèle paramétrique de trajectoire pour la zone d'intérêt considérée. Le filtre de Kalman étendu, permet de faire simultanément prédiction (valeur future) et débruitage pour les modèles avec des équations non linéaires, ce qui est particulièrement utile si on considère que le signal observable de position instantanée peut se décomposer comme la combinaison d'une fonction linéaire, d'une fonction sinusoïdale et de bruit de mesure. Notamment, si plusieurs sujets sont détectés, l'étape d'estimation de la trajectoire comporte la mise en œuvre, pour la zone d'intérêt détectée de chaque sujet, d'un filtre de Kalman étendu du modèle paramétrique de trajectoire selon ladite au moins une dimension.

Les positions, calculées ou déterminées, ainsi que ladite trajectoire estimée sont préférentiellement dans, ou transposées dans, un référentiel propre à la caméra de capture.

Notamment, la détermination de la position de la zone d'intérêt à au moins un instant futur *t_{capture}* à partir de la trajectoire estimée par mise en œuvre d'un filtre de Kalman étendu n'est réalisé que si ledit filtre de Kalman a convergé.

Avantageusement, la fréquence d'estimation de la trajectoire est confondue avec la fréquence d'échantillonnage du filtre de Kalman étendu, appelée aussi fréquence de mise à jour du filtre de Kalman étendu, inférieure ou égale à une fréquence d'acquisition d'images contexte par le système de caméra de contexte, préférentiellement elle-même supérieure ou égale à ladite fréquence de calcul de la position en trois dimensions de la zone d'intérêt à partir de la série d'images contexte acquises.

Avantageusement, la trajectoire en trois dimensions de la zone d'intérêt est estimée à une fréquence égale à la fréquence de calcul de position en trois dimensions de la zone d'intérêt, , ce qui permet une synchronisation des calculs. En variante, la fréquence d'échantillonnage du filtre de Kalman étendu peut être variable, par exemple dans le cas d'un système de caméra de contexte comportant une multiplicité de capteurs fusionnés entre eux, ayant des fréquences différentes, si bien que les calculs de positions ne sont pas nécessairement à des instants synchronisés entre eux et la mise à jour du filtre est préférentiellement effectuée à chaque nouvelle position calculée, un tel dispositif et procédé permet notamment de limiter les occultations dans le volume de détection, grâce à la fusion de données des capteurs.

Avantageusement, la fréquence de calcul de la position varie temporellement, ce qui permet de s'adapter à la disponibilité des mesures capteur, en particulier si une cible est momentanément occultée, par exemple, pour l'acquisition d'iris, la personne pourrait tourner la tête, ce qui ferait disparaître les yeux du champ d'acquisition, ou un changement de temps d'exposition du système de caméra de contexte en fonction de l'éclairage pourrait se produire. De même, cela permet aussi de s'adapter à la perte d'image pour cause de charge de l'unité centrale de traitement du dispositif de traitement de l'information mettant en œuvre l'invention. Par exemple, en cas de non-détection de la zone d'intérêt dans une image, une baisse de la fréquence de calcul de la position peut être appliquée. Ainsi, la fréquence de mise à jour du filtre de Kalman étendu est variable, en fonction de la détection de la zone d'intérêt dans les images acquises, le filtre de Kalman étendu n'étant pas mis à jour au pas de calcul auquel la zone d'intérêt n'a pas été détectée dans l'image acquise audit pas, ce qui évite des calculs.

Dans un mode de réalisation, le procédé comprend une étape d'application, à une fréquence d'application, d'un filtre passe bande selon ladite au moins une dimension au signal observable de position instantanée pour extraire le signal observable périodique.

Notamment, le signal observable périodique est centré sur zéro, ce qui résulte de l'application du filtre passe bande et permet une compatibilité avec la composante temporelle périodique du modèle de trajectoire centrée sur zéro.

Avantageusement, la fréquence de mise à jour du filtre de Kalman étendu est égale à la fréquence d'application du filtre passe bande.

Notamment, la fréquence d'application du filtre passe-bande est variable, ce qui permet de s'adapter aux cas d'occultation du sujet dans lesquels la position en trois dimensions ne peut être calculées sur certaines images acquises. Avantageusement, le filtre passe-bande est biquadratique, ce qui permet une implémentation adaptée et robuste.

Avantageusement, les coefficients du filtre passe bande sont déterminés expérimentalement à partir d'essais réalisés sur un échantillon de sujets, notamment à des vitesses de marche variées, préférentiellement dont la fréquence moyenne d'oscillation (en y) varie entre 1 et 2Hz, par analyse spectrale des données ainsi obtenues.

Dans un mode de réalisation, le filtre de Kalman étendu repose sur un vecteur de mesure à au moins deux observateurs, comportant comme premier observateur le signal observable de position instantanée, constitué de la séquence de positions calculées de la zone d'intérêt, et comme deuxième observateur le signal observable périodique.

Dans un mode de réalisation, un vecteur d'état du filtre de Kalman étendu comporte cinq états dont une position moyenne de la zone d'intérêt selon ladite au moins une dimension, une vitesse de variation de la position moyenne de la zone d'intérêt selon ladite au moins une dimension , une amplitude d'oscillation de la zone d'intérêt autour de la position moyenne, une phase d'oscillation autour de la position moyenne et une pulsation d'oscillation de la position moyenne de la zone d'intérêt. Par exemple, dans le cas d'application à un iris, pour un modèle paramétrique de trajectoire selon la dimension y uniquement, les états précédemment listés correspondent par exemple à la hauteur des yeux de la personne, à la vitesse de variation de cette hauteur (hors oscillation (composante "linéaire")), à l'amplitude de l'oscillation de la hauteur des yeux, la phase de la sinusoïde modélisant cette oscillation autour de la hauteur moyenne des yeux et vitesse de variation de cette phase, c'est à dire la pulsation d'oscillation, notamment issue de la cadence des pas de la personne. Cette composition des états permet de gagner en précision en s'attachant à des paramètres décrivant la démarche. De manière équivalente, la pulsation et la phase, peuvent être remplacés par une fréquence et une phase.

Dans un mode de réalisation, la phase d'initialisation du filtre de Kalman étendu comprend une détermination d'un vecteur d'état initial par détermination de paramètres d'initialisation comportant:
- un paramètre d'amplitude ,
- un paramètre de phase ;
- un paramètre de pulsation ;
- un paramètre de taux de variation ;
- un paramètre d'ordonnée à l'origine;
lesdits paramètres d'initialisation étant déterminés à partir de tout ou partie de la séquence de positions calculées en trois dimensions de la zone d'intérêt. Notamment, pour ladite zone d'intérêt, une seule phase d'initialisation suffit, y compris en cas d'occultation temporaire du sujet dans une ou des images.

Avantageusement, ladite partie de la séquence comporte au moins deux positions calculées sur la base d'images acquises successivement par le système de caméra de contexte, et comporte par exemple les n premières positions calculées en trois dimensions de la zone d'intérêt, avec n notamment supérieur ou égal à 4, par exemple 8 , en particulier pour un sujet dont la fréquence de marche est sensiblement d'un hertz.

Dans un mode de réalisation, ladite partie de la séquence de positions comprend les positions calculées pour ladite zone d'intérêt sur la base d'images acquises successivement, dont la première image est celle dans laquelle la zone d'intérêt est détectée une première fois, et les images suivantes étant lesquelles sont détectées la zone d'intérêt, jusqu'à ce que au moins deux extrema locaux soient détectés, ce qui permet d'atteindre une fin de mouvement de pas et de s'initialiser sur au moins un demi-mouvement de pas, en considérant par exemple que le milieu de mouvement de pas correspond à un maximum local et la fin du mouvement de pas correspond à un minimum local (ou l'inverse). Ce mode de réalisation permet donc une initialisation robuste et adaptée à un modèle de trajectoire multidimensionnel.

Dans un mode de réalisation, une matrice de covariance du bruit de processus du filtre de Kalman étendu dépend de la période d'échantillonnage du filtre de Kalman étendu et d'au moins une variance de la vitesse de variation de la position moyenne de la zone d'intérêt selon ladite au moins une dimension , d'une variance de la pulsation d'oscillation de la zone d'intérêt autour de la position moyenne de la zone d'intérêt ou d'une variance d'amplitude d'oscillation de la zone d'intérêt autour de la position moyenne de la zone d'intérêt. Ainsi, la matrice de covariance du bruit de processus du filtre de Kalman étendu dépend de la période d'échantillonnage du filtre de Kalman étendu et d'au moins une variance de la vitesse représentative du sujet en mouvement , de la période d'oscillation représentative du mouvement du sujet en mouvement ou de l'amplitude d'oscillation représentative du mouvement du sujet en mouvement. Lesdites variances sont préférentiellement pré-calibrées empiriquement (par exemple sur la base d'une pré-étude statistique) et/ou dépendent de positions de la zone d'intérêt calculées avant la phase de prédiction.

Préférentiellement, la matrice de covariance du bruit de processus du filtre de Kalman étendu dépend de la période d'échantillonnage du filtre de Kalman étendu et des trois variances.

Dans un mode de réalisation, l'estimation de la trajectoire de la zone d'intérêt à un instant arbitraire futur *t_{racking}* est obtenue par calcul de tangente à la trajectoire modélisée audit instant arbitraire futur *t_{tracking}* et dont **les** paramètres résultent de la mise à jour du filtre de Kalman étendu sur la base d'images acquises antérieurement à l'estimation, notamment en écrivant la trajectoire modélisé sous la forme de position *pos* et vitesse *spd* selon : $\begin{matrix}pos \left({t}_{tracking}\right) = {P}_{mean trajectory} \left({t}_{measure position}\right) + {drift}_{mean trajectory} \\ ∗ \left({t}_{tracking}-{t}_{measure position}\right) + Amplitude \\ ∗ sin \left(Φ\left({t}_{measure position}\right)+ω∗\left({t}_{tracking}-{t}_{measure position}\right)\right)\end{matrix}$ $\begin{matrix}spd \left({t}_{tracking}\right) = {drift}_{mean trajectory} + Amplitude ∗ ω \\ ∗ cos \left(Φ\left({t}_{measure position}\right)+ω∗\left({t}_{tracking}-{t}_{measure position}\right)\right)\end{matrix}$ , avec *t_{measure position}* l'instant de la dernière acquisition d'image contexte utilisée pour estimer la trajectoire, la tangente au modèle paramétrique s'écrivant : $pos \left(t\right) = pos \left({t}_{tracking}\right) + spd \left({t}_{tracking}\right) ∗ \left(t-{t}_{tracking}\right)$ , ce qui permet, en appliquant *t = t_{capture}* , d'obtenir la détermination de la position de la zone d'intérêt à l'instant *t_{capture}* futur.

L'instant arbitraire futur *t_{tracking}* est avantageusement un instant estimé de réception de la trajectoire par le coprocesseur temps réel, ce qui permet de prendre en compte la latence entre le temps réel et les acquisitions d'images contexte .

Dans un mode de réalisation, le pointage de la caméra de capture en direction de la position déterminée de la zone d'intérêt en fonction de la trajectoire en trois dimensions de la zone d'intérêt est réalisé à une fréquence supérieure à la fréquence de calcul, ce qui permet une dynamique de pointage supérieure à la fréquence de calcul de position et un suivi en temps réel sur la base de la dernière estimation de trajectoire de la zone d'intérêt à *t_{tracking}.*

Avantageusement, le système de caméra de contexte comporte deux caméras produisant des images stéréoscopiques.

Avantageusement, le système de caméra de contexte comporte une caméra en temps de vol.

Selon un autre aspect de l'invention, il est proposé un programme d'ordinateur comprenant des instructions adaptées à la mise en œuvre de chacune des étapes du procédé selon l'invention lorsque ledit programme est exécuté sur un ordinateur.

Selon un autre aspect de l'invention, il est proposé un moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'invention.

Selon un autre aspect de l'invention, il est proposé un dispositif de capture d'images d'une zone d'intérêt d'un sujet en mouvement au sein d'un volume de capture, le dispositif comportant :
- un système de caméra de contexte ;
- une caméra de capture ;
- un processeur configuré pour les étapes suivantes :
   - calcul répété à une fréquence de calcul d'une position-en trois dimensions de la zone d'intérêt, formant en sortie une séquence de positions en trois dimensions de la zone d'intérêt, dont est fonction un signal observable de position instantanée, à partir d'une série d'images acquises par le système de caméra de contexte dans lesquelles la zone d'intérêt est détectée et localisée;
   - extraction, à une fréquence d'application, d'un signal observable périodique à partir du signal observable de position instantanée ;
   - estimation d'une trajectoire en trois dimensions de la zone d'intérêt dans le volume de capture à partir des positions calculées, la trajectoire étant, selon au moins une dimension, définie par un modèle paramétrique de trajectoire combinant une composante temporelle périodique et une composante temporelle linéaire ;
   - détermination d'une position de la zone d'intérêt à au moins un instant futur *t_{capture}* à partir de la trajectoire estimée en trois dimensions de la zone d'intérêt ;
   - capture à l' instant *t_{capture}* d'une image de la zone d'intérêt avec pointage de la caméra de capture en direction de la position déterminée de la zone d'intérêt à l'instant *t_{capture}* ; ce qui permet le pointage de la caméra de capture en direction de la position déterminée de la zone d'intérêt à l'instant *t_{capture}* , et capture d'une image par la caméra de capture à l'instant *t_{capture}* et présente les mêmes avantages que le procédé selon l'invention.

Dans un mode de réalisation, la caméra de capture est mobile en rotation de manière à pointer dans la direction de la position déterminée de la zone d'intérêt dans ladite au moins une dimension.

Avantageusement, le système de caméra de contexte comporte deux caméras produisant des images stéréoscopiques.

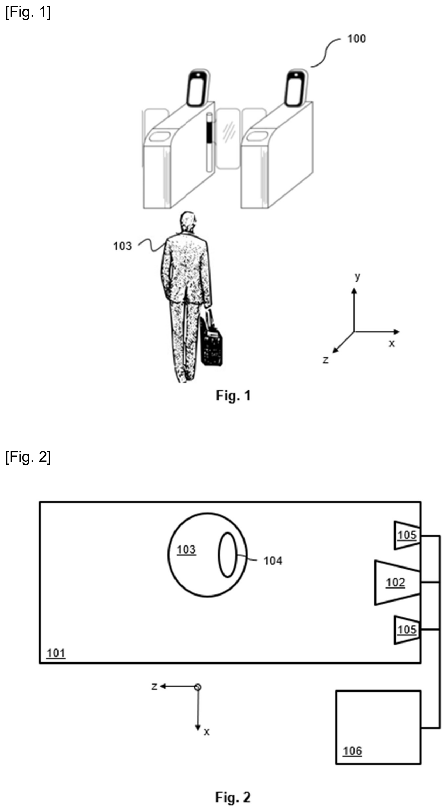

Avantageusement, le système de caméra de contexte comporte une caméra en temps de vol.
L'invention sera mieux comprise, grâce à la description ci-après, qui se rapporte à des modes de réalisations et des variantes selon la présente invention, donnés à titre d'exemples non limitatifs et expliqués avec référence aux dessins annexés, dans lesquels :
la figure 1 représente, un dispositif de capture selon un mode de réalisation de l'invention dans un contexte d'application ;
la figure 2 représente, selon un schéma de principe, une architecture du dispositif de capture selon un mode de réalisation de l'invention ;
la figure 3 représente, selon un schéma de principe, une architecture matérielle d'un dispositif de capture selon un exemple de réalisation de l'invention ;
la figure 4 représente, une architecture logicielle de l'estimation et du suivi de trajectoire dans un exemple de réalisation de l'invention ;
la figure 5 représente le principe de l'estimation de trajectoire dans un exemple de réalisation de l'invention ;
et la figure 6 est un exemple de schéma d'un dispositif de traitement de l'information pour la mise en œuvre d'un ou plusieurs modes de réalisation de l'invention. Des références identiques seront utilisées d'une figure à l'autre pour désigner des éléments identiques ou similaires, dans leur forme ou dans leur fonction.
L'invention peut s'appliquer dans différents contextes. Il peut s'agir de la reconnaissance des iris d'une personne 103 en mouvement évoluant devant un dispositif 100 de capture d'images ou encore de la reconnaissance d'un badge porté par une personne 103 en mouvement évoluant devant un dispositif 100 de capture d'images, dans le but par exemple d'autoriser ou interdire un accès à ladite personne et/ou d'horodater son passage. Le sujet peut, par exemple, traverser un accès sécurisé, tel que dans un aéroport, dans un laboratoire de virologie, une centrale nucléaire, ou simplement évoluer dans un espace libre, tel qu'un espace public, et être suivie par le dispositif de capture d'images. Un autre exemple de réalisation de l'invention concerne la capture d'un code bidimensionnel ou encore d'un code QR (pour Quick Response code en anglais) posé sur un objet qui est déplacé par une personne en mouvement, en particulier de marche, lors de livraison ou manutention notamment. Il s'agit alors de capturer le code de l'objet pendant sa manipulation, typiquement dans un entrepôt. Dans tous les cas, il s'agit de capturer une image nette d'une zone d'intérêt localisée ou portée par un sujet en mouvement.
L'exemple de réalisation de la figure 1 se place dans le contexte de la reconnaissance des iris d'une personne 103 en mouvement évoluant devant un dispositif 100 de capture d'images selon un mode de réalisation de l'invention, disposé dans un aéroport. L'acquisition en mouvement des iris de la personne 103 permet sa reconnaissance et son authentification en amont du dispositif 100, ce qui permet par exemple l'ouverture automatique des portes matérialisant l'accès sécurisé si la personne est reconnue comme autorisée, et le cas échéant mémoriser son passage, sans qu'elle n'ait notamment à s'arrêter, rendant le passage fluide et rapide, la personne pouvant maintenir sa vitesse de marche.

La Figure 2 illustre l'architecture du dispositif 100 selon un mode de réalisation de l'invention. Cette figure illustre le volume de capture 101 équipé d'une caméra de capture 102. Cette caméra de capture 102 permet avantageusement de capturer une image du un sujet 103 porteur d'une zone d'intérêt 104. Pour ce faire, la caméra de capture 102 est typiquement motorisée pour permettre son orientation dans l'espace. Dans l'exemple de réalisation, elle est dotée de deux moteurs permettant l'un une rotation dans le plan horizontal et l'autre dans le plan vertical. Le mouvement de ces deux moteurs permet de pointer la caméra de capture dans n'importe quelle direction au sein du volume de capture 101. Un troisième moteur permet de régler la mise au point de la caméra de capture, c'est-à-dire d'adapter la prise de vue à la distance du sujet par rapport à la caméra de capture, et plus particulièrement à la distance de la zone d'intérêt 104 portée par le sujet 103 par rapport à la caméra de capture, la distance correspondant ici à une profondeur.

Le dispositif de capture 100 est contrôlé par un dispositif de traitement de l'information 106 qui permet de commander les mouvements de ces moteurs. Typiquement, mais pas obligatoirement, c'est également ce dispositif de traitement de l'information 106 qui reçoit et traite les images reçues de la caméra de capture 102. Le dispositif de traitement de l'information est typiquement un ordinateur, une tablette, un téléphone intelligent (*smartphone* en anglais) ou tout autre dispositif permettant l'exécution d'un programme informatique en charge du contrôle de la caméra, de l'acquisition des images et des différentes étapes du procédé selon l'invention.

Dans un mode de réalisation de référence, la caméra de capture 102 est complétée par un système de caméra de contexte, comportant notamment une ou plusieurs caméras de contexte 105, la distance du sujet pouvant être calculée par triangulation en utilisant au moins deux caméras 105 de contexte. Ce système de caméra de contexte permet de capturer le volume de détection, couvrant tout ou partie du volume de capture, puis de reconnaître dans l'image acquise un sujet 103 et de le localiser, puis de localiser la zone d'intérêt 104 du sujet. Selon les modes de réalisation, le système de caméra de contexte est également contrôlé par le dispositif de traitement de l'information 106. Alternativement, un dispositif dédié peut être chargé du contrôle du système de caméra de contexte. Dans ce cas, ce dispositif communique avec le dispositif 106 pour réaliser la capture. Le système de caméra de contexte peut, en variante, ou en supplément de caméra de contexte, comporter un capteur de temps de vol (*ToF* pour *Time of Fly* en anglais), un radar ou tout autre capteur contribuant à la localisation du sujet. Ces caméras de contexte et leurs éventuels capteurs annexes permettent de calculer la position du sujet 103 et plus particulièrement de la zone d'intérêt 104 du sujet dans l'espace en trois dimensions, comportant notamment le volume de détection et de capture.

Cette estimation de la position de la zone d'intérêt est utilisée pour le contrôle du positionnement et le réglage de la prise de vue de la caméra de capture. Toutefois, l'acquisition des images des caméras 105 de contexte, leur analyse pour produire le positionnement en trois dimensions de la zone d'intérêt, le calcul des commandes de moteurs permettant de positionner la caméra 102 de capture sur la position calculée et l'acquisition des images par la caméra de capture prend un certain temps. Il existe donc des latences entre le calcul de la position et la capture des images de la zone d'intérêt. Du fait du mouvement continu du sujet, de ces latences et d'une imprécision inhérente au calcul de positionnement, l'obtention d'une image de capture nette de la zone d'intérêt est une difficulté.

Selon l'invention, il est proposé de piloter la caméra de capture en fonction, non pas du calcul de la position de la zone d'intérêt faite par les caméras de contexte, mais d'une estimation de cette position au moment de la capture effective de cette zone d'intérêt par la caméra de capture. Cette estimation de la position est donc une estimation d'une position future de la zone d'intérêt au moment de son estimation. Elle est faite à partir des positions effectives calculées qui permettent d'estimer la trajectoire du sujet 103 et donc d'obtenir une détermination de la position dans le futur, au moment où la caméra de capture va procéder à la capture de l'image. On entend par trajectoire la position en fonction du temps, qui modélise le mouvement en fonction du temps, dit autrement la trajectoire d'un point est la courbe géométrique qu'il décrit au cours du mouvement dans le repère de référence et procure donc les informations de position et de vitesse au cours du temps dans le repère de référence. Pour déterminer cette position future, une trajectoire en trois dimensions de la zone d'intérêt 104 à partir des positions calculées est estimée; la trajectoire étant, selon au moins une dimension, définie par un modèle paramétrique de trajectoire combinant une composante temporelle périodique et une composante temporelle linéaire. On comprend ainsi que la position future est déterminée avec une précision élevée et adaptée à la démarche du sujet, que ce dernier marche ou soit en fauteuil roulant par exemple, grâce à la combinaison des deux composantes. En effet, si la personne est en fauteuil roulant, la composante périodique du modèle paramétrique sera estimée nulle.

Le cas échéant, une mise au point peut être effectuée, la position déterminée en trois dimensions est alors modifiée par un facteur de mise au point dans la dimension représentant la distance à la caméra de capture de la zone d'intérêt. Ce facteur de mise au point représente l'ajout d'une valeur évoluant linéairement entre un minimum négatif et un maximum positif autour de la valeur nulle et change entre chaque prise de vue. Le fait de jouer légèrement ainsi sur la mise au point des captures d'image permet d'augmenter les chances d'obtenir au moins une image nette sur un ensemble de captures.

Avantageusement, les moteurs dont est dotée la caméra de capture sont du type sans balais (*brushless* en anglais), notamment en prise directe, qui permettent un mouvement continu du moteur. Ce type de moteurs sans balais permet un suivi fluide et en continu par la caméra de capture des mouvements du sujet sans nuire aux prises de vue. Lorsque les moteurs sont en prise directe, l'absence de réducteur propre à ces moteurs élimine les jeux de fonctionnement afférents. Cela ne serait pas possible avec des moteurs pas à pas pilotés, selon une méthode de pilotage pas à pas, tels qu' utilisés dans des systèmes connus.

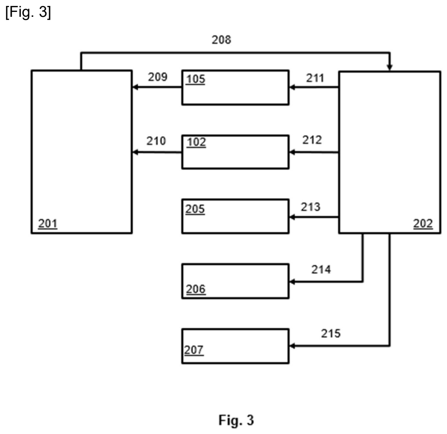

La Figure 3 illustre l'architecture matérielle d'un dispositif de capture 100 selon un exemple de réalisation de l'invention. Le dispositif de capture 100 est principalement contrôlé par le processeur principal 201, préférentiellement, mais pas nécessairement, hébergé dans le dispositif de traitement de l'information 106. Ce processeur 201 est typiquement opéré par un système d'exploitation classique tel que Linux (RTM), Windows (RTM) ou MacOs (RTM). Ces systèmes d'exploitation ne sont pas strictement temps réel, ce qui peut affecter la précision des estimations et devra être pris en compte.

Le dispositif de capture 100 comporte également d'un coprocesseur 202, préférentiellement, mais pas nécessairement, hébergé dans le dispositif de traitement de l'information 106. La caractéristique principale de ce coprocesseur 202 est d'être temps réel, c'est-à-dire d'être capable d'exécuter certaines tâches à des instants précis prédéterminés, et ce de manière garantie. Le coprocesseur temps réel 202 est en charge du déclenchement 211 des caméras de contexte 105, du déclenchement 212 de la caméra de capture 102, de la commande 213 du moteur de mise au point 205 de la caméra de capture, de la commande 214 des moteurs de visée 206 qui permettent l'orientation de la caméra de capture, et finalement de la commande 215 de l'illumination 207 de la zone d'intérêt de manière synchronisée avec les prises de vue de la caméra de capture. Les images 209 issues des caméras de contexte 105 et les images 210 issues de la caméra de capture 102 sont transmises pour traitement au processeur principal 201.

Le coprocesseur temps réel 202 est responsable des tâches temps réel. Il déclenche l'acquisition des images par le système de caméra 105 de contexte à intervalle régulier, par exemple à une fréquence préférentiellement supérieure à 7 Hz et égale dans l'exemple de réalisation décrit ici à 15 Hz. Il pilote les déplacements des moteurs de visée, par exemple avec un asservissement en position et/ou vitesse. Il pilote les déplacements du moteur de mise au point. Il déclenche la capture d'image par la caméra de capture 102 au moment opportun, et il active l'illumination de la zone d'intérêt de manière synchrone avec la capture par la caméra de capture 102.

Le processeur principal 201 reçoit un flux d'images acquises par les caméras de contexte 105 . Sur ces images acquises, aussi appelées images contexte, il détecte la présence du sujet 103 et localise en trois dimensions la zone d'intérêt 104 dans le volume de détection. Sur la base de ces coordonnées en trois dimensions, le processeur principal estime la trajectoire de la zone d'intérêt, puis envoie la trajectoire au coprocesseur 202.

Le coprocesseur 202 asservit les moteurs de visée 206 en position et vitesse, de manière à rejoindre le plus tôt possible la trajectoire qui lui a été envoyée par le processeur principal 201.

Lorsque les moteurs de visée ont "accroché" la trajectoire idéale et pointent en direction de la position déterminée de la zone d'intérêt à l'instant *t_{capture}* , le coprocesseur 202 déclenche la capture d'image de la zone d'intérêt par la caméra de capture 102 à l'instant *t_{capture}* , cette capture pouvant être répétée, notamment périodiquement, par exemple en cas d'occultation du sujet à l'instant *t_{capture} .*

Plus le coprocesseur 202 reçoit des mises à jour de trajectoire souvent, plus il s'approchera de la trajectoire réelle de la zone d'intérêt.

L'avantage de la synchronisation entre le processeur principal et le coprocesseur, est que l'envoi des commandes par le processeur principal n'a pas de contrainte temps réel, ce qui permet d'utiliser un système d'exploitation multi-tâches non temps réel. Dans d'autres modes de réalisation alternatifs, un unique processeur temps réel prend en charge l'intégralité des tâches ici partagées entre le processeur central et le coprocesseur temps réel.

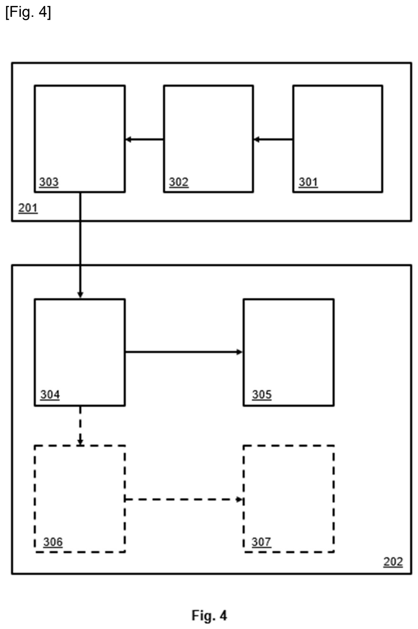

La Figure 4 illustre l'architecture logicielle de l'estimation et du suivi de trajectoire dans un exemple de réalisation de l'invention.

L'exemple de réalisation est basé sur l'utilisation de deux caméras 105 de contexte utilisées en mode stéréoscopique pour permettre une localisation en trois dimensions d'objets détectés sur l'image. Il est rappelé ici, que d'autres modes de réalisation peuvent utiliser d'autres techniques, alternatives ou en complément de la visualisation stéréoscopique, comme les caméras temps de vol, ou encore un système de vision en trois dimensions par lumière structurée.

Le processeur principal 201 exécute un premier module 301 en charge de la localisation de la zone d'intérêt, par exemple les yeux du sujet dans le cas d'une reconnaissance d'iris au sein des images de contexte. L'algorithme de reconnaissance et de localisation utilisé est considéré comme connu et n'est pas le sujet de ce document.

Un second module 302 exécuté par le processeur principal 201 est chargé du calcul de la position en trois dimensions de la zone d'intérêt localisée par le premier module. Préférentiellement, la fréquence de calcul de position en trois dimensions de la zone d'intérêt est inférieure ou égale à la fréquence d'acquisition par la caméra de contexte, par exemple de 15 Hz, l'avantage d'une fréquence de calcul de position inférieure à la fréquence d'acquisition des images est de relaxer le processeur sous forte charge, la fréquence de calcul peut donc être avantageusement variable en fonction de la charge. Ces positions sont mémorisées, au moins les dernières positions. Le nombre de positions mémorisées pour estimer la trajectoire qui est, selon au moins une dimension, définie par un modèle paramétrique de trajectoire combinant une composante temporelle périodique et une composante temporelle linéaire; est au minimum de deux positions. Préférentiellement, les positions constituant un pas complet du sujet servent à la phase d'initialisation du filtre de Kalman étendu mis en œuvre pour estimer la trajectoire.

Un troisième module 303 exécuté par le processeur principal 201 est chargé de l'estimation de la trajectoire de la zone d'intérêt. La trajectoire est estimée en fonction du temps. Pour ce faire, les images de contexte reçues sont marquées temporellement d'une étiquette temporelle (*timestamp* en anglais) lors de leur réception. Ces étiquettes temporelles permettent d'associer un index temporel *n* aux positions calculées en trois dimensions. A l'index temporel *n*, correspondant à un instant *t*, correspond donc la position en trois dimensions *Pₙ = (Xₙ, Yₙ, Zₙ).* On obtient ainsi une séquence de positions indexées *Pᵢ*. Le modèle *P_{eyes}*(*t*) de trajectoire comporte :
- une composante temporelle périodique *P_{periodic}*(*t*) qui est fonction d'un paramètre d'amplitude Amplitude , d'un paramètre de phase Φ₀ et d'un paramètre de pulsation *ω_{walk}*. De manière équivalente à cette décomposition spectrale en pulsation, une décomposition en fréquence est possible
- une composante temporelle linéaire *Pₗᵢₙₑₐᵣ*(*t*) fonction d'un paramètre de taux de variation *drif t_{mean trajectory}* et d'un paramètre d'ordonnée à l'origine *P_{mean trajectory}.*

Le modèle *P_{eyes}*(*t*) paramétrique, selon les trois dimensions, de trajectoire des yeux s'écrit : *P_{eyes}*(*t*) *= Pₗᵢₙₑₐᵣ*(*t*) + *P_{periodic}(t)* avec :
*Pₗᵢₙₑₐᵣ(t) = P_{mean trajectory}(t)* , qui correspond dans cet exemple à la position moyenne des yeux hors oscillation dans le temps, c'est-à-dire à la position moyennée des deux yeux au cours du temps hors oscillation, ici selon les trois dimensions, et avec ${P}_{mean trajectory} \left(t\right) = {P}_{mean trajectory} + {drift}_{mean trajectory} ∗ \left(t-{t}_{0}\right) ;$ et *P_{periodic}(t) = Amplitude* * *sin*(*Φ*(*t*)) qui correspond dans cet exemple à l'oscillation de la position moyenne des yeux dans le temps, c'est-à-dire à l'oscillation de la position moyennée des deux yeux au cours du temps, ici selon les trois dimensions, et avec $Φ \left(t\right) = {Φ}_{0} + {ω}_{walk} ∗ \left(t-{t}_{0}\right)$

Pour séparer la composante linéaire de la composante périodique du signal observable de position instantanée, un filtre passe bande est appliqué, qui peut être différent selon les dimensions, au signal observable de position instantanée composé des positions calculées des yeux dans le temps.

Un filtre de Kalman étendu est utilisé pour estimer ce modèle paramétrique de trajectoire. Le filtre de Kalman étendu repose sur :
- un vecteur de mesure $Z \left(t\right) = \left\{\begin{matrix}{{P}_{eyes} \left(t\right)}^{˜} \\ {{P}_{periodic} \left(t\right)}^{˜}\end{matrix}\right.$ à deux observateurs, comportant comme premier observateur le signal observable ${{P}_{eyes} \left(t\right)}^{˜}$ de position instantanée, constitué de la séquence de positions calculées des yeux, et comme deuxième observateur le signal observable ${{P}_{periodic} \left(t\right)}^{˜}$ périodique ;
- un vecteur d'état $X \left(t\right) = \left\{\begin{matrix}{P}_{mean trajectory} \left(t\right) \\ {{P}_{mean trajectory} \left(t\right)}^{⋅} = {drift}_{mean trajectory} \\ Amplitude \\ Φ \left(t\right) \\ {Φ \left(t\right)}^{⋅} = ω\end{matrix}\right.$ comportant cinq états dont une position *P_{mean trajectory}(t)* moyenne de la zone d'intérêt selon chaque dimension ,une vitesse de variation *P_{mean trajectory}(t)* de la position moyenne de la zone d'intérêt selon chaque dimension, qui correspond donc à une vitesse représentative du sujet en mouvement comme étant le changement entre deux instants de mesure de la vitesse d'un sujet en mouvement (hors oscillation) , une amplitude d'oscillation *Amplitude* de la zone d'intérêt autour de la position moyenne, une phase Φ(*t*) d'oscillation autour de la position moyenne et une pulsation d'oscillation Φ(*t*) de la position moyenne de la zone d'intérêt. Ainsi dans cet exemple, les états précédemment listés correspondent à la hauteur des yeux de la personne *P_{mean trajectory}* (*t*)*,* à la vitesse de variation *P_{mean trajectory}(t)* de cette hauteur (hors oscillation (composante "linéaire")), à l'amplitude *Amplitude* de l'oscillation de la hauteur des yeux, la phase Φ(*t*) de la sinusoïde modélisant cette oscillation autour de la position moyenne et vitesse de variation de cette phase Φ(*t*) , c'est à dire la pulsation d'oscillation, notamment liée de la cadence des pas de la personne. L'amplitude de l'oscillation est notamment liée à la morphologie et démarche de la personne. Cette composition des états permet de gagner en précision en s'attachant à des paramètres décrivant la démarche, les deux premiers états se rapportant à la partie linéaire de la prédiction et les trois derniers à la partie périodique de la prédiction. On note, que de manière équivalente, la pulsation et la phase peuvent être remplacés par une fréquence et une phase.
Pour chaque nouveau sujet, la trajectoire de ses yeux *P_{eyes}(t)* est estimée au moyen d'un modèle paramétrique, par mise en œuvre, d'un filtre de Kalman étendu du modèle paramétrique de trajectoire selon chaque dimension, comprenant une phase d'initialisation du filtre de Kalman étendu, une phase de prédiction du filtre de Kalman étendu et une phase de mise à jour du filtre de Kalman étendu selon une fréquence d'échantillonnage. La figure suivante explicitera plus en détail la mise en œuvre de cette étape d'estimation de la trajectoire. Dans le cas présenté ici, une seule trajectoire des yeux par personne est modélisée car la trajectoire modélisée est celle d'un point à mi-distance entre les deux yeux, le champ de la caméra de capture permettant d'acquérir les deux yeux en même temps, car la caméra est avantageusement composée de deux capteurs avec deux objectifs qui partagent le même moteur ; néanmoins il serait possible de calculer la trajectoire de chaque œil et de mettre à jour la trajectoire de chaque œil en parallèle.

Avantageusement, dans le cas où les images acquises contiendraient plusieurs zones d'intérêt, par exemple dans le cas où plusieurs sujets (avec chacun une zone d'intérêt) seraient détectés dans les images acquises, les trajectoires des zones d'intérêt (incluant notamment les mises à jour de filtre) peuvent être estimées en parallèle, les captures de chaque zone d'intérêt pouvant ensuite réalisées séquentiellement notamment si la caméra de capture 102 est unique.

Le module 303 d'estimation de la trajectoire transmet les estimations successives à un module 304 de suivi de trajectoire exécuté par le coprocesseur temps réel 202. Ce module de suivi de trajectoire est apte à déterminer la position de la zone d'intérêt, à tout instant, sur la base de la dernière estimation de trajectoire transmise par le module 303, de manière à assurer un pointage optimisé en continu. Dans la pratique, la fréquence de transmission des estimations successives est généralement supérieure à la fréquence de capture des images de contexte. Dans cet exemple, les estimations de trajectoire sont transmises à une fréquence de 15 Hz, puis dans le coprocesseur temps réel le module de suivi de trajectoire est chargé de déterminer la position de la zone d'intérêt à une fréquence de 1kHz, sur la base de la dernière estimation de trajectoire transmise par le module 303 ce qui garantit une continuité du pointage par la caméra de capture pour éviter un décrochage de trajectoire, même si la fréquence de capture est ici de 15 Hz, ou variable. En effet, si l'image capturée convient à la reconnaissance biométrique du sujet, une autre capture n'est pas nécessaire

Cette capacité de détermination de la position de la zone d'intérêt à tout instant permet de piloter le module 305 de contrôle des moteurs de visée de la caméra de capture 102. C'est ainsi que la caméra de capture 102 réalise un suivi continu de la zone d'intérêt.

Un module 306 reçoit également la position déterminée de la zone d'intérêt. Ce module 306 est chargé de calculer un facteur de mise au point qui est ajouté à la coordonnée en profondeur (Z) de la position déterminée, c'est-à-dire à la distance entre la caméra de capture et la zone d'intérêt. Ce facteur de mise au point évolue, par exemple, de manière linéaire entre un minimum négatif et un maximum positif. La distance entre la caméra de capture et la position déterminée de la zone d'intérêt, corrigée du facteur de mise au point, permet la commande du module 307 qui contrôle le moteur de mise au point de la caméra de capture 102. Les modules 306 et 307 figurent en pointillés car ils sont optionnels, le dispositif 100 pouvant fonctionner sans mise au point additionnelle, notamment si la profondeur de champ des objectifs de la caméra de capture est suffisamment large relativement à l'erreur de prédiction de la position, par exemple de quelques centimètres en utilisant des capteurs EDOF (de l'anglais « *Extended depth of focus* ») *.*

En option, ce troisième module 303 est chargé d'une estimation additionnelle de la trajectoire de la zone d'intérêt. Lors de la phase de prédiction du filtre de Kalman étendu, dès que l'erreur de prédiction | Pk/k-1 - Pk/k | du filtre de Kalman étendu par rapport au calcul de la position réelle est inférieure à un seuil de convergence, par exemple déterminé statistiquement ou déterminé de manière dynamique, on considère que le filtre de Kalman étendu a convergé. Avantageusement, tant que le filtre de Kalman étendu n'a pas convergé l'estimation additionnelle est utilisée, et ce notamment pendant la phase d'initialisation. Cette estimation additionnelle est typiquement faite par approximation linéaire des positions mémorisées. Le mode de réalisation le plus simple se contente d'estimer les coordonnées d'une droite passant par les deux dernières positions mémorisées. Dans ce cas, on estime une trajectoire localement rectiligne, ce qui peut être suffisant. Dans des modes de réalisation plus complexe, il est possible de calculer une modélisation polynomiale de la trajectoire basée sur un nombre de positions supérieur à deux. Une telle modélisation polynomiale permet de d'obtenir une estimation de trajectoire plus précise que la trajectoire localement rectiligne. La trajectoire est estimée en fonction du temps. La séquence de positions indexées *Pᵢ* permet de calculer une vitesse associée à cette position dès lors que l'on a mémorisé au moins deux positions. Cette série peut comporter des index pour lesquels il n'y a pas de positions associées. Ceci peut être dû à un problème de transmission d'images contexte, à une impossibilité de reconnaître la zone d'intérêt dans certaines images contexte par exemple. Ces positions manquantes doivent être prise en compte lors de l'estimation de la trajectoire, notamment pour l'estimation de la vitesse. Par exemple, pour une estimation de trajectoire localement rectiligne sur la base de deux positions mémorisées *Pₙ₋₁ = (Xₙ₋₁,Yₙ₋₁,Zₙ₋₁*)*,* et *Pₙ* = (*Xₙ, Yₙ, Zₙ*)*,* il est possible d'estimer la vitesse du sujet à l'instant *t* correspondant à l'index temporel *n : Vₙ =* (*VXₙ, VYₙ, VZₙ*) *=* (*Xₙ - Xₙ₋₁, Yₙ - Yₙ₋₁, Zₙ - Zₙ₋₁*). Si la position *Pₙ₋₁* manque, il est possible d'utiliser de manière similaire la position *Pₙ₋₂,* il faut alors diviser la vitesse obtenue par deux pour tenir compte de la position manquante. Il est alors possible d'estimer une position à un temps T supérieur au temps courant *t,* à partir de la position courante à l'instant *t* en appliquant la vitesse sur un temps (*T - t*).

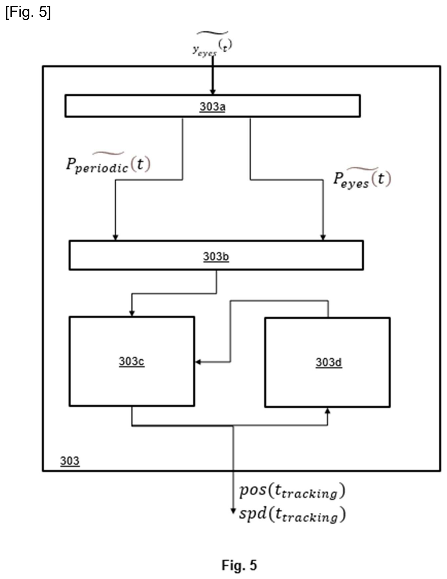

La Figure 5 illustre le principe de l'estimation de la trajectoire dans un exemple de réalisation de l'invention. Pour des raisons de clarté, on ne s'intéressera ici qu'à la modélisation de la trajectoire *P_{eyes}(t)* paramétrique selon la seule dimension y, caractérisant la hauteur des yeux du sujet, qui est la plus sujette à variation périodique.

La modélisation de la dynamique des yeux s'écrit avec les équations d'état du système : $\left\{\begin{matrix}{x \left(t\right)}^{⋅} = f \left(x\left(t\right),u\left(t\right),w\left(t\right)\right) é quation de transition \\ z \left(t\right) = h \left(x\left(t\right),v\left(t\right)\right) é quation d ′ observation\end{matrix}\right.$

Soit, en discrétisation d'Euler, dénotant l'indice de temps: $\left\{\begin{matrix}{x}_{k} = f \left({x}_{k - 1}, {u}_{k}, {w}_{k}\right) \\ {z}_{k} = h \left({x}_{k}, {v}_{k}\right)\end{matrix}\right.$ Avec :
*xₖ* l'état réel,
*uₖ* la commande en entrée, ici nulle étant donné l'absence de commande ;
*wₖ* le bruit de transition, gaussien centré et de matrice de covariance *Qₖ*
*zₖ* mesure
*vₖ* le bruit de mesure, gaussien centré et de matrice de covariance *Rₖ .*
Soit en considérant que *P_{eyes}(t)* se composait de *P_{mean trajectory}(t) = P_{mean trajectory} + drift_{mean trajectory} * (t* - t₀). et *Pₗᵢₙₑₐᵣ(t) = P_{periodic}(t) = Amplitude* * *sin*(*Φ*(*t*)) , avec *Φ*(*t*) *=* Φ₀ + *ω_{walk}* * (*t* - t₀ ) , pour l'évolution de la position des yeux suivant l'axe y on écrit: $\left\{\begin{matrix}{y}_{eyes} \left(t\right) = {y}_{linear} \left(t\right) + {y}_{periodic} \left(t\right) \\ {y}_{linear} \left(t\right) = height \left(t\right) = {h}_{0} + drift ∗ \left(t-{t}_{0}\right) \\ {y}_{periodic} \left(t\right) = Amplitude ∗ sin \left(Φ\left(t\right)\right) , avec Φ \left(t\right) = {Φ}_{0} + {ω}_{walk} ∗ \left(t-{t}_{0}\right)\end{matrix}\right.$ Avec *height(t)* hauteur des yeux détectés du sujet, *h*₀ la hauteur initiale des yeux de la personne, *drift* la vitesse de variation de cette hauteur (hors oscillation (composante "linéaire")), *Amplitude* l'amplitude de l'oscillation de la hauteur des yeux, Φ(*t*) la phase d'oscillation, Φ₀ la phase initiale et *ω_{walk}* la vitesse de variation de cette phase , c'est à dire la pulsation d'oscillation, notamment liée de la cadence des pas de la personne. Le terme «initial» fait référence ici à un instant t₀ de fin de phase d'initialisation.

En appliquant le filtre de Kalman étendu à ce modèle à deux observateurs on écrit alors le vecteur d'états *X*(*t*) et le vecteur de mesure ***Z***(*t*) : $X \left(t\right) \left\{\begin{matrix}height \left(t\right) \\ {height \left(t\right)}^{.} = drift \\ Amplitude \\ Φ \left(t\right) \\ {Φ \left(t\right)}^{.} = {ω}_{walk}\end{matrix}\right. , Z \left(t\right) = \left\{\begin{matrix}{{y}_{eyes} \left(t\right)}^{˜} \\ {{y}_{periodic} \left(t\right)}^{˜}\end{matrix}\right.$

Le module d'estimation de la trajectoire des yeux 303 reçoit en entrée les positions tridimensionnelles des yeux calculées selon ladite fréquence de calcul sur la base d'image(s) capturées par le système de caméra de contexte. Chaque position tridimensionnelle reçue constitue le signal ${{P}_{eyes} \left(t\right)}^{˜}$ observable de position instantanée.

Le signal observable de position instantanée est ici traité pour n'extraire que sa composante selon l'axe y : ${{y}_{eyes} \left(t\right)}^{˜}$ à laquelle est appliqué 303a un filtre passe-bande de manière à isoler la partie non linéaire, supposée périodique, notamment sinusoïdale, de la composante selon l'axe y du signal observable de position instantanée. La fréquence d'application du filtre passe-bande est par exemple de 15 Hz, notamment égale à la fréquence d'acquisition, ou inférieure à la fréquence d'acquisition pour réduire la charge processeur. Avantageusement, la fréquence d'application du filtre passe-bande est variable, ce qui permet de s'adapter aux cas d'occultation du sujet dans lesquels la position en trois dimensions ne peut être calculées sur certaines images acquises. Le signal ${{y}_{eyes} \left(t\right)}^{˜}$ correspond donc au signal observable de position instantanée selon l'axe y, par exemple retourné directement par deux caméras stéréoscopiques composant le système de caméra de contexte, et le signal ${{y}_{periodic} \left(t\right)}^{˜}$ correspond donc au signal observable périodique, centré sur zéro, extrait du signal observable de position instantanée en sortie du filtre passe bande alimenté par la composante ${{y}_{eyes} \left(t\right)}^{˜}$ selon l'axe y du signal observable de position instantanée ${{P}_{eyes} \left(t\right)}^{˜}$. Les paramètres du filtre de passe-bande ont été pré-calibrés par analyse spectrale de données d'essais réalisés sur un échantillon de sujets qui a permis de déterminer que la fréquence moyenne d'oscillation (en y) d'un sujet en mouvement de marche vaut entre 1 et 2Hz.

La phase d'initialisation 303b du filtre de Kalman étendu du modèle paramétrique de trajectoire comprend une détermination d'un vecteur d'état *X*(*t*₀) initial par détermination de paramètres d'initialisation comportant:
- un paramètre d'amplitude *Amplitude,*
- un paramètre de phase Φ₀ ;
- un paramètre de pulsation w
- un paramètre de taux de variation *drift*
- un paramètre d'ordonnée à l'origine *P*₀ ;
lesdits paramètres d'initialisation étant déterminés à partir de tout ou partie de la séquence de positions calculées en trois dimensions de la zone d'intérêt dans le volume de détection. Préférentiellement, la détermination des paramètres d'initialisation, formant le vecteur d'état *X*(*t*₀) initial, est réalisée à partir du signal observable de position instantanée de manière à ce que la partie de la séquence couvre le « demi premier pas » capturé du sujet dans les images acquises par le système de caméra de contexte 105. A cet effet, la. partie de la séquence de positions comprend les positions calculées pour ladite zone d'intérêt sur la base d'images acquises successivement par le système de caméra de contexte, dont la première image est celle dans laquelle la zone d'intérêt est détectée une première fois, ainsi que les images suivantes dans lesquelles sont détectées la zone d'intérêt, jusqu'à ce que au moins deux extrema locaux soient détectés Ce qui permet d'écrire les équations du filtre de Kalman étendu suivantes :
- la fonction d'observation : $h \left(X\left(t\right)\right) = \left\{\begin{matrix}height \left(t\right) + Amplitude ∗ sin \left(Φ\left(t\right)\right) \\ Amplitude ∗ sin \left(Φ\left(t\right)\right)\end{matrix}\right.$ et pour une durée *Tₛ* depuis la dernière estimation , représentant la période d'échantillonnage variable:

- la fonction de transition (dite aussi d'évolution) : *f*(***X***(*t*)) *= **F***(*Tₛ*) ** **X***(*t*) *=* $\left\{\begin{matrix}height \left(t\right) + {T}_{s} ∗ drift \\ drift \\ Amplitude \\ Φ \left(t\right) + {T}_{s} ∗ {ω}_{walk} \\ {ω}_{walk}\end{matrix}\right.$ les matrices de transition ***F*** et d'observation ***H*** étant définies comme étant les Jacobiennes respectivement de *f* et de *h* : $F \left({T}_{s}\right) = \left[\begin{matrix}1 & {T}_{s} & 0 & 0 & 0 \\ 0 & 1 & 0 & 0 & 0 \\ 0 & 0 & 1 & 0 & 0 \\ 0 & 0 & 0 & 1 & {T}_{s} \\ 0 & 0 & 0 & 0 & 1\end{matrix}\right]$ $H \left(t\right) = \left[\begin{matrix}1 & 0 & sin \left(Φ\left(t\right)\right) & Amplitude ∗ cos \left(Φ\left(t\right)\right) & 0 \\ 0 & 0 & sin \left(Φ\left(t\right)\right) & Amplitude ∗ cos \left(Φ\left(t\right)\right) & 0\end{matrix}\right]$

A chaque pas de temps courant une phase de prédiction 303c de l'état *X*(*t* + 1) à l'instant suivant a lieu ainsi qu'une phase de mise à jour 303d du filtre de Kalman étendu par rapport à la mesure $\left({{y}_{eyes} \left(t\right)}^{˜}\right.$ du pas de temps courant) et la prédiction faite au pas de temps précédent.

Dit autrement, pendant la phase de prédiction (appelée aussi phase de convergence) on utilise l'état estimé de l'instant précédent pour produire une estimation de l'état courant : ${\hat{X}}_{\left.k\right| k - 1} = f \left({\hat{X}}_{\left.k-1\right| k - 1}, {u}_{k}, 0\right)$ et ${P}_{\left.k\right| k - 1} = {F}_{k} {P}_{\left.k-1\right| k - 1} {F}_{k}^{T} + {Q}_{k}$ Avec P la matrice de covariance de l'erreur, c'est-à-dire ici du bruit de mesure car le bruit de commande est considéré nul ,
*uₖ* nul car on ne commande pas le mouvement du sujet,
et *Fₖ* matrice qui relie l'état précédent à l'état actuel
Ce qui s'écrit : $P = \left[\begin{matrix}{P}_{measure} & {P}_{\left.measure\right| measure _ bpf} \\ {P}_{\left.measure_bpf\right| measure} & {P}_{measure _ bpf}\end{matrix}\right]$ avec, en considérant des bruits indépendants : *P*_{*measure_bpf*|m}*ₑₐₛᵤᵣₑ =* 0 et *Pₘₑₐₛᵤᵣₑ* |*_{measure_bpf} =* 0, et les valeurs de *Pₘₑₐₛᵤᵣₑ* et *P_{measure_bpf}* déterminées expérimentalement, de manière statistique pour le dispositif 100 concerné .
Pour une estimation de trajectoire à fréquence constant *1*/*Tₛ,* le bruit de transition dépend uniquement du bruit à ladite fréquence (*q_{drift}* ou *qₚᵤₗₛₐₜᵢₒₙ*) ${Q}_{process} \left({q}_{drift}, {T}_{s}\right) = {q}_{drift} ∗ \left[\begin{matrix}{{T}_{s}}^{3} / 3 & {{T}_{s}}^{2} / 2 \\ {{T}_{s}}^{2} / 2 & {T}_{s}\end{matrix}\right]$ ${Q}_{process} \left({q}_{pulsation}, {T}_{s}\right) = {q}_{pulsation} ∗ \left[\begin{matrix}{{T}_{s}}^{3} / 3 & {{T}_{s}}^{2} / 2 \\ {{T}_{s}}^{2} / 2 & {T}_{s}\end{matrix}\right]$ La matrice Q de covariance (d'incertitude) initiale du bruit de transition du modèle $Q \left({T}_{s}\right) = \left[\begin{matrix}{Q}_{process} \left({q}_{drift}, {T}_{s}\right) & … & 0 \\ … & {q}_{a} & … \\ 0 & … & {Q}_{process} \left({q}_{pulsation}, {T}_{s}\right)\end{matrix}\right]$ est calibrée en fonction de :
- la variance de la vitesse des personnes: q*_{drift}* représentant le changement d'un instant à l'autre de la vitesse d'une personne (partie linéaire de la prédiction) et
- la variance de la période d'oscillation *qₚᵤₗₛₐₜᵢₒₙ* et ;
- la variance de l'amplitude d'oscillation *qₐ* ;
les trois étant par exemple prédéterminés expérimentalement. Les coefficients initiaux de la matrice de covariance Q du filtre de Kalman étendu sont notamment obtenus par itérations successives de manière à minimiser l'erreur du modèle sur les trajectoires de la base de données d'essais.
Lors de la phase de prédiction 303c du filtre de Kalman étendu, tant que l'erreur de prédiction | Pk/k-1 - Pk/k| du filtre de Kalman étendu par rapport au calcul de la position réelle est supérieure à un seuil de convergence, on considère que le filtre de Kalman étendu n'a pas convergé. Cette vérification permet aussi de s'assurer à chaque pas de temps que le filtre n'a pas divergé. Le seuil de convergence est avantageusement déterminé statistiquement ou de manière dynamique, il est par exemple de l'ordre du mètre, ou inférieur, notamment 0.2 m. Indépendamment de la convergence du filtre, la phase de prédiction 303c se poursuit par la phase de mise à jour 303d .
Dans la phase de mise à jour, les observations de l'instant courant sont utilisées pour corriger l'état prédit dans le but d'obtenir une estimation plus précise : ${{y}^{˜}}_{k} = {z}_{k} - h \left({\hat{X}}_{\left.k\right| k - 1}, 0\right)$ ${S}_{k} = {H}_{k} {P}_{\left.k\right| k - 1} {H}_{k}^{T} + {R}_{k}$ ${K}_{k} = {P}_{\left.k\right| k - 1} {H}_{k}^{T} {S}_{k}^{- 1}$ ${\hat{X}}_{\left.k\right| k} = {\hat{X}}_{\left.k\right| k - 1} + {K}_{k} {{y}^{˜}}_{k}$ ${P}_{\left.k\right| k} = \left(I-{K}_{k}{H}_{k}\right) {P}_{\left.k\right| k - 1}$ La matrice P est mise à jour à chaque pas de calcul correspondant à un nouveau calcul de position et donne le taux de confiance quant à la trajectoire. Préférentiellement, en cas de perte de la zone d'intérêt (occultation), on ne met pas à jour le filtre et quand la zone d'intérêt est de nouveau détectée dans une acquisition ultérieure, on met à jour le filtre avec la période d'échantillonnage correspondant à la durée entre l'instant où la zone d'intérêt a été acquise (et de facto sa position calculée) pour la dernière fois et l'instant où la zone d'intérêt a été acquise de nouveau.

Si le filtre de Kalman étendu a convergé, l'estimation de la trajectoire de la zone d'intérêt audit instant futur *t_{tracking}* est obtenue par calcul de tangente à la trajectoire modélisée sur la base des acquisitions réalisées jusqu'à l'instant de la dernière acquisition *t_{measure position}* utilisée pour mettre à jour le filtre de Kalman étendu (c'est-à-dire comprenant la zone d'intérêt), notamment en écrivant la trajectoire modélisée sous la forme de position *pos* et de vitesse *spd* selon : $pos \left({t}_{tracking}\right) = {P}_{mean trajectory} \left({t}_{measure position}\right) + {drift}_{mean trajectory} ∗ \left(\begin{matrix}{t}_{tracking} \\ - {t}_{measure position}\end{matrix}\right) + Amplitude ∗ sin \left(\begin{matrix}Φ \left({t}_{measure position}\right) + ω \\ ∗ \left({t}_{tracking}-{t}_{measure position}\right)\end{matrix}\right)$ 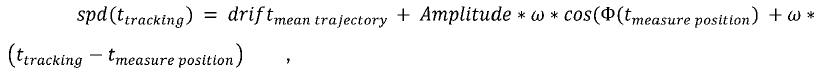 spd(ttracking) = driftmean trajectory + Amplitude ∗ ω ∗ cos(Φ(tmeasure position) + ω ∗ (ttracking - t(measure position en choisissant *t_{tracking}* correspondant à l'instant estimé de réception de ladite trajectoire estimée par le coprocesseur temps réel 202, cela permet de compenser la latence entre les temps réel et la dernière acquisition servant à la mise à jour du filtre de Kalman étendu.

L'estimation de la trajectoire selon la dimension y des yeux à un instant donné *t_{tracking}* de réception par le module 304 de suivi de trajectoire est obtenue par calcul de tangente à la trajectoire modélisée et s'écrit : $pos \left(t\right) = pos \left({t}_{tracking}\right) + spd \left({t}_{tracking}\right) ∗ \left(t-{t}_{tracking}\right)$

La trajectoire selon les deux autres dimensions est par exemple obtenue en utilisant le modèle tel que décrit en lien avec l'estimation additionnelle de trajectoire.
Ainsi, à l'instant courant, on commande le pointage vers les coordonnées de la position *pos* (*t_{capture}*) estimée de la zone d'intérêt pour l'instant *t_{capture}* futur en appliquant l'équation précédente à l'instant *t_{capture}*, ce qui permet de compenser le temps de réponse du ou des systèmes de pointage 305 et/ou de mise au point 307 de la caméra de capture.

Pour obtenir une estimation de trajectoire fiable, il est nécessaire d'échantillonner le calcul des positions à une fréquence suffisante. Cette fréquence va dépendre de la vitesse d'évolution du sujet et donc dépendre de l'application envisagée. Par exemple, dans le cas de la reconnaissance des iris d'une personne se déplaçant en marchant, une fréquence de 15 images de contexte et donc de 15 estimées de positions calculées par seconde s'est révélée suffisante, de même pour l'estimation de la trajectoire.

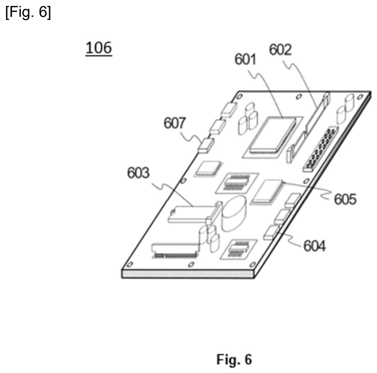

La figure 6 représente un exemple de structure d'un dispositif 106 de traitement de l'information pour la mise en œuvre d'un ou plusieurs modes de réalisation de l'invention. Le dispositif 106 de traitement de l'information comprend typiquement une ou plusieurs unités centrales de traitement (CPU) 601 et/ou un ou plusieurs processeurs graphiques (GPU) 605, un module physique (NET) 604 de communication, un ou plusieurs modules physiques 607 d'entrée / sortie pour l'échanges de données avec des dispositifs externes (tel que le système de caméra de contexte, la caméra de capture), un support 602 de stockage transitoire tel qu'une mémoire vive (RAM), un support 603 d'enregistrement non-transitoire (FLASH), et des bus de communication (non représentés) pour le transfert de données entre les composants internes du dispositif 106 de traitement de l'information.

Le dispositif 106 de traitement de l'information permet l'exécution d'un ou plusieurs modules 301, 302, 303, 304, 305, 306, 307 de programmes comprenant des instructions qui, lorsque le ou les modules de programme sont exécutés, conduisent le dispositif 106 de traitement de l'information à mettre en œuvre le procédé selon l'invention. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Le dispositif 106 de traitement de l'information comporte les éléments suivants, connectés entre eux via un bus de communication:
- une unité centrale de traitement (CPU) 601, tel qu'un microprocesseur, et incluant notamment une horloge interne ;
- une mémoire transitoire 602, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif est préférentiellement complétée par une mémoire vive 602 optionnelle connectée à un port d'extension, par exemple ;
- une mémoire non transitoire 603 pour stocker les programmes informatiques et données de calibration pour la mise en œuvre des modes de réalisation de l'invention ; les programmes informatiques stockés comprennent notamment un programme informatique comprenant des instructions adaptées à la mise en œuvre de tout ou partie des étapes du procédé selon l'invention lorsque ledit programme est exécuté sur le dispositif 106 de traitement, ladite mémoire non transitoire 603 est alors un exemple de moyen non-transitoire de stockage d'informations, amovible ou non;
- un module de communication 604 comportant une interface réseau 604, est connectée à un réseau de communication sur lequel des données numériques à traiter sont transmises ou reçues ; L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lus à partir de l'interface de réseau pour la réception sous le contrôle de l'application logicielle exécutée dans le processeur 601 ;
- une interface IHM utilisateur, comportant notamment un processeur graphique 605, pour recevoir des entrées d'un utilisateur ou pour afficher des informations à un utilisateur notamment des informations de guidage (visuelles et/ou vocales);
- un module d'entrée/sortie 607 pour la réception / l'envoi de données depuis / vers des périphériques externes tels que disque dur, support de stockage amovible ou autres.

Le code exécutable peut être stocké dans la mémoire non transitoire 603, par exemple une mémoire flash ou une mémoire morte, ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage du dispositif 106 de traitement de l'information, tel que la mémoire 603, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités, tel que la mémoire non transitoire 603. Après la mise sous tension, le CPU 601 est capable d'exécuter des instructions de la mémoire RAM transitoire 602, relatives à une application logicielle. Un tel logiciel, lorsqu'il est exécuté par le processeur 601, permet l'exécution du procédé selon l'invention.

Dans un mode de réalisation, l'appareil est un appareil programmable qui utilise un logiciel pour mettre en œuvre l'invention. En variante, la présente invention peut être mise en œuvre dans le matériel (par exemple, sous la forme d'un circuit intégré spécifique ou ASIC (de l'anglais *application-specific integrated circuit*) ou sous la forme d'un composant logique programmable ou FPGA (de l'anglais *field programmable gate array*).

Selon un mode de réalisation, le dispositif de traitement de l'information 106 est uniquement hébergée localement, ou, en variante, être externe au terminal 1, ou encore distribuée et comporter de multiples sous unités de traitement, notamment au moins en partie externe et communiquant entre elles via l'interface réseau 604. De même, en fonction de la nature du terminal notamment, tout ou partie de la mémoire peut être physiquement déportée, hébergée par exemple sur un serveur distant.

## Revendications

1. Procédé de capture d'images d'une zone d'intérêt d'un sujet (103) en mouvement au sein d'un volume de capture, le procédé comportant les étapes suivantes :
- calcul, répété à une fréquence de calcul, d'une position-en trois dimensions de la zone d'intérêt, formant en sortie une séquence de positions en trois dimensions de la zone d'intérêt, dont est fonction un signal ( ${{P}_{eyes} \left(t\right)}^{˜}$) observable de position instantanée, à partir d'une série d'images acquises dans lesquelles la zone d'intérêt est détectée et localisée;
- extraction, à une fréquence d'application, d'un signal observable périodique ( ${{P}_{periodic}}^{˜} \left(t\right)$) à partir du signal ( ${{P}_{eyes} \left(t\right)}^{˜}$) observable de position instantanée ;
- estimation d'une trajectoire (*P_{eyes}*(*t*)) en trois dimensions de la zone d'intérêt dans le volume de capture à partir des positions calculées; la trajectoire étant, selon au moins une dimension, définie par un modèle paramétrique de trajectoire combinant une composante temporelle périodique (*P_{periodic}*(*t*)) et une composante temporelle linéaire (*Pₗᵢₙₑₐᵣ*(*t*));
- détermination d'une position de la zone d'intérêt à au moins un instant futur *t_{capture}* à partir de la trajectoire estimée en trois dimensions de la zone d'intérêt ;
- capture à l'instant *t_{capture}* d'une image de la zone d'intérêt par une caméra (102) de capture avec pointage de la caméra (102) de capture en direction de la position déterminée de la zone d'intérêt à l'instant *t_{capture}.*

2. Procédé selon la revendication 1, dans lequel le sujet (103) est une personne, la zone d'intérêt étant une partie d'un visage du sujet en mouvement, notamment un œil, préférentiellement un iris, ou étant une représentation visuelle portée par le sujet, telle qu'un code à barres à deux dimensions.

3. Procédé selon l'une quelconque des revendications 1 à 2, dans lequel l'étape d'estimation de la trajectoire (*P_{eyes}*(*t*)) comporte une mise en œuvre, pour la zone d'intérêt détectée du sujet, d'un filtre de Kalman étendu du modèle paramétrique de trajectoire selon ladite au moins une dimension, comprenant une phase d'initialisation (303b) du filtre de Kalman étendu, une phase de prédiction (303c) du filtre de Kalman étendu et une de mise à jour (303d) du filtre de Kalman étendu selon une fréquence d'échantillonnage.

4. Procédé selon la revendication 1 à 3, comportant une étape d'application (303a) , à la fréquence d'application, d'un filtre passe bande selon ladite au moins une dimension au signal ( ${{P}_{eyes} \left(t\right)}^{˜}$) observable de position instantanée pour extraire le signal observable périodique ( ${{P}_{periodic} \left(t\right)}^{˜}$) .

5. Procédé selon la revendication 4, dans lequel le filtre de Kalman étendu repose sur un vecteur de mesure ( $\left(Z\left(t\right)=\left\{\begin{matrix}{{P}_{eyes} \left(t\right)}^{˜} \\ {{P}_{periodic} \left(t\right)}^{˜}\end{matrix}\right.\right)$ )à au moins deux observateurs, comportant comme premier observateur le signal observable de position instantanée, constitué de la séquence de positions calculées de la zone d'intérêt, et comme deuxième observateur le signal observable périodique.

6. Procédé selon l'une quelconque des revendication 3 à 5, dans lequel un vecteur d'état du filtre de Kalman étendu ( $X \left(t\right) =$*=* $\left\{\begin{matrix}{P}_{mean trajectory} \left(t\right) \\ {{P}_{mean trajectory} \left(t\right)}^{⋅} = {drift}_{mean trajectory} \\ Amplitude \\ Φ \left(t\right) \\ {Φ \left(t\right) = ω}^{⋅}\end{matrix}\right.$) comporte cinq états dont une position moyenne de la zone d'intérêt selon ladite au moins une dimension (*P_{mean trajectory}*(*t*))*,* une vitesse de variation (*P_{mean trajectory}*(*t*)) de la position moyenne de la zone d'intérêt selon ladite au moins une dimension , une amplitude d'oscillation (*Amplitude*) de la zone d'intérêt autour de la position moyenne, une phase (Φ(*t*)) d'oscillation autour de la position moyenne et une pulsation d'oscillation (Φ(*t*)) de la position moyenne de la zone d'intérêt.

7. Procédé selon l'une quelconque des revendications 3 à 6, dans lequel la phase d'initialisation (303b) du filtre comprend une détermination d'un vecteur d'état (*X*(*t*₀)) initial par détermination de paramètres d'initialisation comportant:
- un paramètre d'amplitude (*Amplitude*),
- un paramètre de phase (Φ₀) ;
- un paramètre de pulsation (*ω*) ;
- un paramètre de taux de variation (*drift*) ;
- un paramètre d'ordonnée à l'origine (*P*₀) ;
lesdits paramètres d'initialisation étant déterminés à partir de tout ou partie de la séquence de positions calculées en trois dimensions de la zone d'intérêt.

8. Procédé selon la revendication précédente, dans lequel ladite partie de la séquence de positions comprend les positions calculées pour ladite zone d'intérêt sur la base d'images acquises successivement, dont la première image est celle dans laquelle la zone d'intérêt est détectée une première fois, et les images suivantes étant celles dans lesquelles sont détectées la zone d'intérêt, jusqu'à ce que au moins deux extrema locaux soient détectés.

9. Procédé selon l'une quelconque des revendications 3 à 8, dans lequel une matrice de covariance du bruit de processus (Q) du filtre de Kalman étendu dépend de la période d'échantillonnage (*Tₛ*) du filtre de Kalman étendu et d'au moins une variance (*q_{drift}*) de la vitesse de variation (*P_{mean trajectory}*(*t*)) de la position moyenne de la zone d'intérêt selon ladite au moins une dimension , d'une variance (*qₚᵤₗₛₐₜᵢₒₙ*) de la pulsation d'oscillation (Φ(*t*)) de la zone d'intérêt autour de la position moyenne de la zone d'intérêt ou d'une variance (*qₐ*) d'amplitude d'oscillation (*Amplitude*) de la zone d'intérêt autour de la position moyenne de la zone d'intérêt.

10. Procédé selon l'une quelconque des revendications 3 à 9, dans lequel l'estimation de la trajectoire de la zone d'intérêt à un instant arbitraire futur *t_{tracking}* est obtenue par calcul de tangente à la trajectoire modélisée audit instant arbitraire futur *t_{tracking}* et dont les paramètres résultent de la mise à jour du filtre de Kalman étendu sur la base d'images acquises antérieurement à l'estimation, notamment en écrivant la trajectoire modélisée sous la forme de position *pos* et vitesse *spd* selon : $\begin{matrix}pos \left({t}_{tracking}\right) = {P}_{mean trajectory} \left({t}_{measure position}\right) + {drift}_{mean trajectory} \\ ∗ \left({t}_{tracking}-{t}_{measure position}\right) + Amplitude \\ ∗ sin \left(Φ\left({t}_{measure position}\right)+ω∗\left({t}_{tracking}-{t}_{measure position}\right)\right.\end{matrix}$ $spd \left({t}_{tracking}\right) = {drift}_{mean trajectory} + Amplitude * ω * cos \left(Φ\left({t}_{measure position}\right)+ω*\left({t}_{tracking}-{t}_{measure position}\right)\right. ,$ avec *t_{measure position}* l'instant de la dernière acquisition d'image contexte utilisée pour estimer la trajectoire, la tangente au modèle paramétrique s'écrivant : $pos \left(t\right) = pos \left({t}_{tracking}\right) + spd \left({t}_{tracking}\right) ∗ \left(t-{t}_{tracking}\right) .$

11. Procédé selon l'une quelconque des revendications 1 à 10, dans lequel le pointage de la caméra (102) de capture en direction de la position déterminée de la zone d'intérêt en fonction de la trajectoire en trois dimensions de la zone d'intérêt est réalisé à une fréquence supérieure à la fréquence de calcul.

12. Programme d'ordinateur comprenant des instructions adaptées à la mise en œuvre de chacune des étapes du procédé selon l'une quelconque des revendications 1 à 11 lorsque ledit programme est exécuté sur un ordinateur.

13. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 11.

14. Dispositif de capture d'images d'une zone d'intérêt d'un sujet en mouvement au sein d'un volume de capture, le dispositif comportant:
- un système de caméra (105) de contexte ;
- une caméra (102) de capture ;
- un processeur configuré pour les étapes suivantes :
- calcul répété à une fréquence de calcul d'une position-en trois dimensions de la zone d'intérêt, formant en sortie une séquence de positions en trois dimensions de la zone d'intérêt, dont est fonction un signal ( ${{P}_{eyes} \left(t\right)}^{˜}$ ) observable de position instantanée, à partir d'une série d'images acquises par le système de caméra de contexte dans lesquelles la zone d'intérêt est détectée et localisée;
- extraction, à une fréquence d'application, d'un signal observable périodique ( ${{P}_{periodic}}^{˜} \left(t\right)$) à partir du signal ( ${{P}_{eyes}}^{˜} \left(t\right)$) observable de position instantanée ;
- estimation d'une trajectoire (*P_{eyes}*(*t*)) en trois dimensions de la zone d'intérêt dans le volume de capture à partir des positions calculées, la trajectoire étant, selon au moins une dimension, définie par un modèle paramétrique de trajectoire combinant une composante temporelle périodique *(P_{periodic}*(*t*)) et une composante temporelle linéaire (*Pₗᵢₙₑₐᵣ*(*t*));
- détermination d'une position de la zone d'intérêt à au moins un instant futur *t_{capture}* à partir de la trajectoire estimée en trois dimensions de la zone d'intérêt ;
- capture à l' instant *t_{capture}* d'une une image de la zone d'intérêt avec pointage de la caméra (102) de capture en direction de la position déterminée de la zone d'intérêt à l'instant *t_{capture} .*

15. Dispositif selon la revendication précédente, dans lequel la caméra (102) de capture est mobile en rotation de manière à pointer dans la direction de la position déterminée de la zone d'intérêt dans ladite au moins une dimension.
